# EUROPÄISCHE PATENTSCHRIFT

(11) **EP 2 320 356 B1**
(45) Veröffentlichungstag und Bekanntmachung des Hinweises auf die Patenterteilung: **12.12.2012**
(21) Anmeldenummer: 10013935.1
(22) Anmeldetag: 25.10.2010
(51) Int. Cl.: G06K 19/077

(54) **Verfahren zur Herstellung von Inlays für kartenförmige Datenträger**
Method for manufacturing inlays for card-shaped data carriers
Procédé de fabrication d'inlays pour supports de données en forme de cartes

(30) Priorität: 27.10.2009 DE 102009050753
(43) Veröffentlichungstag der Anmeldung: 11.05.2011
(73) Patentinhaber: Giesecke & Devrient GmbH, 81677 München (DE)
(72) Erfinder: Stegmüller, Michael, 80809 München (DE); Tarantino, Thomas, 83410 Laufen (DE)

(56) Entgegenhaltungen:
- DE-A1-102007 008 487
- US-A- 5 907 477

## Beschreibung

Die vorliegende Erfindung betrifft ein Verfahren zur Herstellung von Inlays für kartenförmige Datenträger, insbesondere Chipkarten, Kreditkarten, Identifikationsdokumente oder dergleichen, mit zumindest einem elektronischen Bauteil, sowie ein entsprechendes Verfahren zur Herstellung kartenförmiger Datenträger mit einem solchen Inlay.

Elektronische Bauteile, wie beispielsweise Displays, Lautsprecher oder Chips, insbesondere Chips mit Antennen zur kontaktlosen Kommunikation, werden zunehmend in kartenförmige Datenträger integriert, um deren Funktionalität zu erweitern. Allerdings sind diese elektronischen Bauteile oder Module relativ empfindlich gegenüber Temperatur und/oder Druck. Aus diesem Grund können Displays oder andere elektronische Komponenten nicht ohne Weiteres mit herkömmlichen Verfahren, wie beispielsweise Laminieren, in einen kartenförmigen Datenträger eingebracht werden, da hohe Temperaturen und hoher Druck die elektronischen Bauteile beschädigen könnten.

Es wurden daher bereits alternative Verfahren vorgeschlagen, bei denen vermieden wird, dass das elektronische Bauteil beim Fertigen beispielsweise einer Chipkarte hohen Temperaturen und hohem Druck ausgesetzt wird. In der DE 102 39 564 A1 wird beispielsweise ein Verfahren zur Herstellung eines tragbaren Datenträgers mit einer Anzeigevorrichtung beschrieben. Um das Display während der Produktion nicht zu beschädigen, wird die Reflexionsschicht des Displays separat in eine stufige Aussparung der Chipkarte eingebracht. Durch geeignete Ausgestaltung der Kontakte wird der Rest des Displays erst in einem letzten Verfahrensschritt eingesetzt, so dass das Display keinen Belastungen ausgesetzt ist. Allerdings können bei diesem Verfahren die Displaymodule nicht als Ganzes vorgefertigt werden.

In der DE 103 24 043 A1 wird ein kartenförmiger elektronischer Datenträger mit einem Funktionsinlett beschrieben. Der Kartenkörper ist mehrschichtig aufgebaut, wobei eine Zwischenschicht die elektrischen Kontakte bildet, welche in eine Aussparung des Kartenkörpers zur Aufnahme des Inlays hineinragen. Das Inlay wird schwimmend gelagert und ist vor äußeren Belastungen geschützt. Es ist jedoch eine komplexe Bearbeitung der freiliegenden Kontakte notwendig.

Die DE 10 2007 008 487 A1 beschreibt ein Verfahren zur Herstellung eines Inlays für einen kartenförmigen Datenträger mit einem elektronischen Bauteil. Die elektronischen Bauteile werden auf einer Trägerfolie positioniert. Es wird ein Formrahmen mit Aussparungen auf die Trägerfolie aufgesetzt, wobei in den Aussparungen jeweils zumindest ein Bauteil aufgenommen wird. Die Aussparungen werden mit einem Füllmaterial gefüllt, welches nach einem Zusammenführen der ersten Trägerfolie und einer zweiten Trägerfolie unter Temperatureinwirkung aushärtet. Der Formrahmen, welcher eine Höhe von mindestens der Höhe der Bauteile aufweist, hält die beiden Trägerfolien auf Abstand. Die beiden Trägerfolien werden schließlich entfernt und die Inlays aus dem ausgehärteten, mit dem Formrahmen verbundenen Füllmaterial herausgetrennt. Anschließend werden die so hergestellten Inlays mit weiteren Schichten zu kartenförmigen Datenträgern laminiert. Das empfindliche elektronische Bauteil ist durch die Einbettung in dem ausgehärteten Füllmaterial vor zu hohen Belastungen geschützt. Zur Lamiruerung des Inlays mit den Deckfolien sind zudem relativ niedrige Temperaturen ausreichend, so dass das elektronische Bauteil nicht beschädigt wird.

Während des Herstellungsprozesses bilden die Trägerfolien mit dem Formrahmen als Abstandshalter einen Nutzenbogen. Nach dem Ausstanzen der Inlays werden die Reste des Nutzenbogens, d.h. die durch den Formrahmen mit anhaftendem Füllmaterial verbleibenden Stege, entsorgt.

Aufgabe der vorliegenden Erfindung ist es, ein wirtschaftlicheres Verfahren zur Herstellung von Inlays für kartenförmige Datenträger und ein Verfahren zur Herstellung solcher kartenförmiger Datenträger vorzuschlagen.

Die Aufgabe wird erfindungsgemäß durch ein Verfahren zur Herstellung eines Inlays und ein Verfahren zur Herstellung eines kartenförmigen Datenträgers mit einem solchen Inlay gemäß den unabhängigen Ansprüchen gelöst. Weiterbildungen und vorteilhafte Ausgestaltungen der Erfindung sind in den davon abhängigen Ansprüchen angegeben.

Dementsprechend ist vorgesehen, dass das Verfahren zur Herstellung der Inlays unter Wiederverwendung des Formrahmens wiederholt wird. Dies umfasst insbesondere die Wiederholung der Schritte des Positionierens elektronischer Bauteile auf einer ersten Trägerfolie, das Aufbringen des wiederverwendeten Formrahmens auf der ersten oder einer zweiten Trägerfolie, das Füllen der Aussparungen des Formrahmens mit Füllmaterial, das Zusammenführen der beiden Trägerfolien mit dem dazwischen liegenden Formrahmen, das Aushärten des Füllmaterials und schließlich das Entfernen der Trägerfolien und das Heraustrennen der Inlays aus dem Formrahmen.

Die Trägerfolien sind als Umlaufbänder ausgebildet, so dass das Verfahren als Endlosverfahren durchgeführt werden kann.

Durch die Wiederverwendbarkeit des Formrahmens wird die Wirtschaftlichkeit des Verfahrens gesteigert. Die Wiederverwendung des Formrahmens ist in einfacher Weise möglich, wenn das Füllmaterial während des Aushärtens aufgrund der Materialkombination von Formrahmen und Füllmaterial mit diesem keine feste Verbindung eingeht, sondern nach dem Aushärten von dem Formrahmen ablösbar ist. Auf diese Weise wird Abfall reduziert, da die Inlays nicht aus einem Bogen ausgestanzt werden, von dem die verbleibenden Stege entsorgt werden müssen. Stattdessen können die Inlays aus dem Formrahmen in einfacher Weise herausgedrückt werden. Insbesondere geht das Füllmaterial nur mit den elektronischen Bauteilen eine physikalisch und/oder mechanisch unlösbare Verbindung ein, d.h. das ausgehärtete Füllmaterial ist vorteilhaft auch von den beiden Trägerfolien leicht lösbar. Die Trägerfolien können daher auch als Trennfolien bezeichnet werden.

Das Inlay, d.h. das in das Füllmaterial eingebettete elektronischen Bauteil, kann dann in einem weiteren Schritt zwischen Deckfolien laminiert werden, um einen kartenförmigen Datenträger, insbesondere eine Chipkarte, eine Kreditkarte, ein Identifikationsdokument oder dergleichen herzustellen. Die Aussparungen des Formrahmens weisen dazu vorteilhaft Normbreiten und -längen auf, insbesondere die des gängigen Kartenformats ID-1 gemäß ISO 7810 oder anderer kleinerer oder größerer Formate wie ID-000 oder ID-2, ID-3 oder jeweils dazwischenliegender Formate, so dass durch Auflaminieren von Deckschichten unmittelbar Karten mit Normabmessungen erhalten werden.

Wie erwähnt, sind die Trägerfolien als Umlaufbänder ausgebildet, so dass das Verfahren als Endlosverfahren durchgeführt werden kann. Vorteilhaft ist dann auch der Formrahmen als umlaufendes Gitterband ausgebildet. Das vereinfacht die Automatisierbarkeit des Verfahrens. Die Wiederverwendbarkeit des Formrahmens und die Ausbildung als umlaufendes Gitterband erlaubt eine Steigerung der Produktionsrate, da die Herstellung der Inlays nicht auf einzelnen Nutzenbögen erfolgt, welche einzeln bearbeitet werden müssen. Die Herstellung der Inlays kann als Endlosproduktion erfolgen, wobei die Trägerfolien und der als Gitterband ausgebildete Formrahmen beispielsweise über Rollen oder Schienen umgelenkt und erneut dem Prozess zugeführt werden können.

Weiter bevorzugt wird zum Aushärten des Füllmaterials ultraviolettes Licht durch mindestens eine der beiden Trägerfolien hindurch auf das Füllmaterial gestrahlt. Insbesondere ist es natürlich möglich, durch beide Trägerfolien hindurch ultraviolette Strahlung auf das Füllmaterial einwirken zu lassen. Um die Verwendung von ultraviolettem Licht zum Aushärten des Füllmaterials zu ermöglichen, ist zumindest die Trägerfolie, durch die das UV-Licht dringen soll, für UV-Licht transparent ausgebildet. Wenn auf beiden Seiten UV-Lichtquellen angeordnet sind, müssen beide Trägerfolien für UV-Licht transparent sein. Als Füllmaterial wird somit vorzugsweise ein unter UV-Licht härtender Klebstoff verwendet. Durch die Verwendung von unter ultraviolettem Licht aushärtenden Materialien als Füllmaterial können empfindliche elektronische Bauteile eingebettet werden, ohne dass sie hohen Temperaturen ausgesetzt sind.

Um ein Verrutschen oder Verschieben der elektronischen Bauteile auf der Trägerfolie, beispielsweise durch die Transportbewegung der Trägerfolien oder durch das Aufbringen des flüssigen oder zähflüssigen Füllmaterials, vor dem Aushärten des Füllmaterials zu verhindern, werden die elektronischen Bauteile vorteilhaft auf der Trägerfolie fixiert. Dies kann mittels eines speziellen Klebstoffs erfolgen, welcher auf die Trägerfolie, auf der die elektronischen Bauteile positioniert werden, vor dem Positionieren der Bauteile aufgebracht wird. Aufgrund der Klebrigkeit oder "Tackigkeit" des Klebstoffs werden die Bauteile auf der Trägerfolie fixiert. Da die fertigen Inlays von der Trägerfolie ablösbar sein sollen, ist der zum Fixieren verwendete Klebstoff so ausgebildet, dass er während des Aushärtens des Füllmaterials unter Einwirkung des ultravioletten Lichts erweicht. Dies erfolgt beispielsweise durch eine reversible Polymerisation des Klebstoffs. Durch die Verwendung eines solchen Klebstoffs sind die elektronischen Bauteile zunächst gegen eine mögliche Verschiebung auf der Trägerfolie geschützt, können jedoch nach Bestrahlung mit UV-Licht, d.h. nach dem Aushärten der die Bauteile schützenden Formmasse, leicht von der Trägerfolie abgelöst werden.

Alternativ kann zur Fixierung der elektronischen Bauteile auf der Trägerfolie das gleiche Material wie das Füllmaterial verwendet werden. Das heißt, es wird vor dem Positionieren der Bauteile auf der Trägerfolie eine zum Fixieren ausreichende Menge Füllmaterial auf die Trägerfolie aufgebracht. Vorteilhafterweise wird dies nur unvollständig ausgehärtet, beispielsweise durch die Bestrahlung mit ultraviolettem Licht bei Verwendung eines UV-Klebstoffs als Füllmaterial. Dadurch wird eine gewisse Klebrigkeit erreicht, so dass die Bauteile, welche auf das unvollständig ausgehärtete Füllmaterial aufgebracht werden, ausreichend fixiert werden. Nach dem Fixieren wird weiteres Füllmaterial aufgebracht, um die Bauteile einzubetten. Es erfolgt dann eine vollständige Aushärtung des Füllmaterials und des zu dem Füllmaterial identischen, jedoch bereits teilweise ausgehärteten Fixiermaterials.

Es ist vorteilhaft, auf die Trägerfolien einen bestimmten Druck aufzubringen, um glatte Oberflächen des Inlays zu erreichen und das Füllmaterial an das einzubettende elektronische Bauteil anzudrücken. Insbesondere wird das Füllmaterial in den Aussparungen des Formrahmens dadurch gleichmäßig verteilt, so dass keine Fehlstellen insbesondere an den Rändern der Inlays auftreten.

Vorzugsweise erfolgt das Zusammenführen der beiden Trägerfolien vor dem Aushärten des Füllmaterials unter Verwendung einer Anpressrolle, so dass überschüssiges Füllmaterial aus den Aussparungen des Formrahmens heraus gedrängt wird. Das Anpressen kann beispielsweise mittels geeigneter Rollen oder Rundstäben erfolgen. Die Zusammenführung mittels Anpressrollen wird vorteilhafterweise so durchgeführt, dass diejenige Trägerfolie, auf der der Formrahmen mit dem noch nicht ausgehärteten Füllmaterial aufgebracht ist, im Wesentlichen geradlinig transportiert wird, wohingegen die andere Trägerfolie, auf der z.B. auch die elektronischen Bauteile angebracht sein können, welche jedoch bevorzugt nur als Deckschicht dient, mittels der Anpressrollen angepresst wird. Das Auftragen eines Überschusses an Füllmaterial ist vorteilhaft, um sicherzustellen, dass die Aussparungen des Formrahmens vollständig gefüllt sind und die Inlays keine Fehlstellen aufweisen. Durch das Anpressen kann dieser Überschuss einfach abgestreift werden.

Um die einfache Ablösbarkeit der Trägerfolien von dem ausgehärteten Füllmaterial zu gewährleisten, bestehen zumindest die Oberflächen der Trägerfolien, welche an das Füllmaterial angrenzen, bevorzugt aus PET (Polyethylenterephthalat). Die Oberflächen können zudem besonders glatt ausgebildet sein, um ein mikromechanisches Anhaften möglichst zu unterbinden.

Nach dem Ablösen der Trägerfolien können die Inlays weiter verarbeitet werden. Eine mögliche Form der Weiterverarbeitung besteht darin, daß die Inlays auf Folien aufgebracht werden, welche die gewünschten Farben, Formen, Symbole, Beschriftungen etc, dem sogenannten Artwork, aufweisen. Diese Artwork-Folien können einseitig oder beidseitig auf dem Inlay aufgebracht werden. Um die Artwork-Folie beidseitig aufzubringen, werden die Inlays einzeln auf ein Transportband gelegt, wobei auf mindestens einer Seite des Inlays die Artwork-Folie nach dem Prinzip der vorliegenden Erfindung auf dem Inlay aufgebracht wird. Zur Verbindung der Artwork-Folie mit dem Inlay können alle geeigneten Verfahren verwendet werden, wie beispielsweise das Laminationsverfahren, bei dem durch Wärme und Druck eine Verbindung zwischen Artwork-Folien und Inlay hergestellt wird. Das ein-oder beidseitige Aufbringen der Artwork-Folie kann im sogenannten Rollezu-Rolle-Verfahren aufgebracht werden, d.h. die Artwork-Folie wird von einer Rolle aus mindestens einspurig zugeführt, auf dem Inlay aufgebracht und nach dem Aufbringen auf dem Inlay mit dem Inlay wieder auf einer Rolle aufgewickelt. Die Artwork-Folie hat dazu bevorzugt die Breite des Inlays um einen unnötigen Verschnitt der überstehenden Folie zu vermeiden, wenn die Inlays später vereinzelt werden, z.B. durch Ausstanzen.

Alternativ können mehrere Inlays auf einen ersten Folienbogen mit Artwork aufgebracht werden. Anschließend wird ein zweiter Folienbogen über die Inlays gelegt. Die Folienbögen werden mit den Inlays durch geeignete Verfahren verbunden, beispielsweise durch Laminieren. Nach dem Verbinden der Folienbögen mit den Inlays können die Inlays mit den Folienbögen durch geeignete Verfahren vereinzelt werden, z.B. durch Ausstanzen.

Vorteilhaft an den beiden oben beschriebenen Möglichkeiten des Aufbringens der Artwork-Folie ist, daß vor Verarbeitung der Artwork-Folie, diese auf Mängel geprüft werden kann, beispielsweise ob die optischen Merkmale in Ordnung sind oder ob die Oberfläche der Artwork-Folie die gewünschten mechanischen (z.B. Rauhigkeit) oder/und elektrischen (z.B. elektrische Leitfähigkeit) Eigenschaften aufweist. In Abhängigkeit von der Prüfung wird im positiven Fall ein Inlay aufgebracht bzw. wird im negativen Fall kein Inlay oder nur ein Dummy-Inlay aufgebracht, welches nur ein Körper entsprechend den Außenmaßen eines Inlays ohne teure funktionelle Komponenten, wie z.B. Display, Chip, etc., ist. Ferner ist an diesem Verfahren vorteilhaft, daß bei einer mangelhaften Artwork-Folie keine teuren Inlays zuerst verarbeitet und wegen der mangelhaften Artwork-Folie als teurer Ausschuß entsorgt werden müssen. Eine deutliche Reduzierung der Ausschußkosten ist deshalb der große Vorteil dieses Verfahrens.

Neben der Überprüfung der Artwork-Folie auf Mängel werden die Inlays ebenso auf ihren korrekten Zustand und Funktion überprüft bevor diese weiterverarbeitet werden, z.B. indem die Inlays mit den Artwork-Folien verarbeitet werden. Somit werden bereits die Inlays vor der weiteren Verarbeitung aussortiert, welche den Anforderungen nicht entsprechen, z.B. daß sie keine korrekte Funktion des Displays aufweisen oder daß das Inlay selbst nicht die richtigen Maße aufweist, etc. Dies trägt ebenfalls zu einer weiteren Reduzierung der Ausschußkosten bei.

Die Erfindung wird im Folgenden beispielhaft anhand der begleitenden Zeichnungen beschrieben. Darin zeigen schematisch:
Figur 1 das Verfahren zur Herstellung eines kartenförmigen Datenträgers gemäß einem ersten Ausführungsbeispiel und
Figur 2 ein zweites Ausführungsbeispiel des Verfahrens.

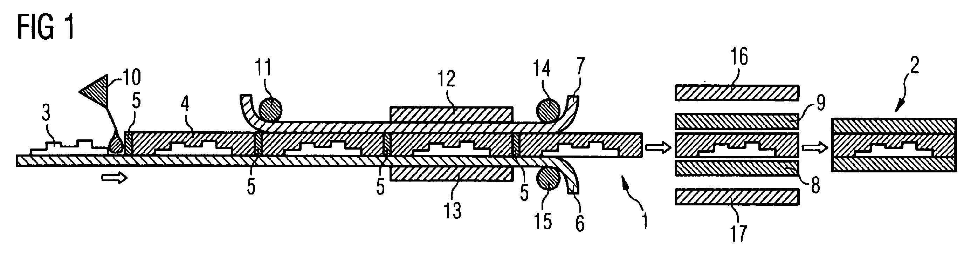

In Figur 1 ist das Verfahren zur Herstellung eines kartenförmigen Datenträgers 2 mit einem elektronischen Bauteil 3 schematisch dargestellt. Dies kann beispielsweise eine Chipkarte 2 mit einem Display 3 sein, welches aufgrund seiner Empfindlichkeit gegenüber hohen Temperaturen und hohem Druck nicht ungeschützt mit weiteren Schichten zu einer Chipkarte laminiert werden kann. Der Einbau des Displays 3 in die Chipkarte 2 erfolgt daher in Form eines Inlays 1, durch welches beschädigende Belastungen des Displays 3 beim nachfolgenden Laminierprozess vermieden oder zumindest reduziert werden.

Zunächst wird das Display 3, oder allgemein das oder die einzubauenden elektronischen Bauteile, auf einer ersten Trägerfolie 6 positioniert. Zuvor wurde auf die Trägerfolie 6 ein Fixiersystem aufgebracht, um ein Verrutschen der elektronischen Bauteile 3 auf der Trägerfolie 6 zu vermeiden. Dies erfolgt, wie eingangs beschrieben, mittels eines Klebstoffs, welcher unter Einwirkung von ultraviolettem Licht wieder erweicht. Alternativ kann die Fixierung auch durch das Aufbringen und nur teilweise Vernetzen von Füllmaterial erfolgen, in welchem die Bauteile 3 später auch eingebettet werden.

Vor oder nach dem Positionieren der Displays 3 auf der Trägerfolie 6 wird ein Formrahmen 5 beispielsweise in Gestalt eines umlaufenden Gitterbandes auf die Trägerfolie 6 aufgesetzt. Das Gitter 5 weist Aussparungen auf, in welchen jeweils zumindest ein elektronisches Bauteil 3 aufgenommen wird. Im Ausführungsbeispiel befindet sich in jeder Aussparung des Gitters 5 ein Displaymodul 3. Der Formrahmen in Gestalt des Gitters 5 dient zum einen als Begrenzung zwischen den Displays 3 auf der Trägerfolie 6 und damit zwischen den herzustellenden Inlays 1. Zum anderen wird durch das Gitter 5 die Höhe der herzustellenden Inlays 1 definiert. Das Gitter 5 weist eine Höhe auf, die mindestens der Höhe der Displays 3 entspricht, damit diese vollständig in Füllmaterial 4 eingebettet werden können. Durch die Form der Aussparungen des Formrahmens 5 wird der Umriss der Inlays 1 bestimmt, beispielsweise im Format ID-1 gemäß ISO 7810.

Wenn die Displays 3 auf der Trägerfolie 6 positioniert sind und der Formrahmen 5 auf der Trägerfolie 6 aufgesetzt ist, werden die Aussparungen des Formrahmens 5, in denen sich jeweils ein Display 3 befindet, mit Füllmaterial 4 gefüllt. Dieses wird über eine Auftrageeinrichtung 10 in flüssiger oder zähflüssiger Form in die Aussparungen des Formrahmens 5 eingebracht. Bei dem Füllmaterial handelt es sich um einen Klebstoff, welcher durch Einstrahlung von beispielsweise ultraviolettem Licht aushärtet.

Nach dem Auftragen des Füllmaterials 4 wird eine zweite Trägerfolie 7 als Deckschicht aufgebracht. Diese wird über eine Anpressrolle 11 auf das Gitter 5 aufgedrückt, welches durch seine Höhe einen vorgegebenen Abstand der beiden Trägerfolien 6, 7 definiert. Durch das Anpressen der Trägerfolie 7 wird ein eventuell vorhandener Überschuss an Füllmaterial 4 aus den Aussparungen des Gitters 5 entfernt und die Trägerfolie 7 angedrückt.

Im nächsten Schritt erfolgt die Aushärtung des Füllmaterials 4. Dazu wirkt auf die Trägerfolien 6, 7 ein Druck, um eine exakte Form des herzustellenden Inlays 1 zu erreichen. Dieser Druck kann beispielsweise mittels Platten 12, 13 übertragen werden, welche Lichtquellen für ultraviolettes Licht, beispielsweise in Form von ultravioletten Leuchtdioden (LED), aufweisen. Die Einrichtungen zum Aufbringen des Drucks und zum Bestrahlen mit ultraviolettem Licht können natürlich auch getrennt ausgebildet sein, beispielsweise in Gestalt von transparenten Druckplatten mit dahinter liegenden UV-Lichtquellen. Um das ultraviolette Licht auf das zu härtende Füllmaterial einstrahlen zu können, weisen die Trägerfolien 6, 7 eine Transparenz für ultraviolettes Licht auf.

Die Materialkombination des Füllmaterials 4, des Formrahmens 5 und der Trägerfolien 6, 7 ist so ausgewählt, dass das Füllmaterial 4 beim Aushärten keine feste Verbindung mit dem Formrahmen 5 und den Trägerfolien 6, 7 eingeht. Das Füllmaterial 4 verbindet sich allenfalls mit dem elektronischen Bauteil 3. Auf diese Weise ist das fertige Inlay 1 von den Trägerfolien 6, 7 leicht ablösbar. Die Trägerfolien 6, 7 werden nach dem Ablösen der Inlays 1 über Rollen 14, 15 umgelenkt und können erneut dem Prozess zugeführt werden. Vorteilhaft sind die Trägerfolien 6, 7 dazu als Umlaufbänder ausgebildet.

Auch der Formrahmen 5 in Gestalt des umlaufenden Gitters kann leicht von den Inlays 1 abgelöst und dem kontinuierlichen Herstellungsprozess erneut zugeführt werden. Die Aussparungen definieren dabei, wie bereits beschrieben, die Form der Inlays 1, so dass diese lediglich zum Beispiel aus dem Gitter 5 herausgedrückt zu werden brauchen.

Als Material für die Trägerfolien 6, 7 und den Formrahmen 5 wird beispielsweise PET (Polytetrafluorethylen) oder Teflon verwendet, da dieses mit dem Füllmaterial 4, d.h. dem UV-härtenden Klebstoff, keine adhäsive Verbindung eingeht.

Die Trägerfolien 6, 7 sind insbesondere PET-Folien wie Hostaphan® und zeichnen sich durch eine geringe Oberflächenspannung und eine geringe Oberflächenrauhigkeit aus, um ein Anhaften des Füllmaterials 4 während der Aushärtung zu verhindern. Durch das Nicht-Anhaften des Füllmaterials 4 an den Trägerfolien 6, 7 wird außerdem eine freie Beweglichkeit des Füllmaterials 4 während des Aushärtens ermöglicht. Dies ist wichtig, da während des Aushärtens ein Volumenschrumpf des Füllmaterials 4 auftritt. Um diesen Volumenschrumpf zu reduzieren, wird als Füllmaterial 4 ein UV-Klebstoffsystem auf Acrylatbasis verwendet, welches mit Füllkomponenten aus PUR (Polyurethan) angereichert ist. Da das Füllmaterial 4 großflächig als Vergussmasse eingesetzt wird, ist es wichtig, den Volumenschrumpf zu reduzieren, um nach der Aushärtung durch ultraviolettes Licht eine ebene und flache Oberfläche des Inlays 1 zu erhalten.

Das fertige Inlay 1 wird in einem weiteren Schritt zwischen Deckfolien 8, 9 laminiert, um die Chipkarte 2 zu erhalten. Das Laminieren erfolgt in diesem Ausführungsbeispiel mittels Laminierblechen 16, 17, zwischen denen die Deckfolien 8, 9 und das Inlay 1 laminiert werden. Dazu wird der zu laminierende Verbund mit Druck und gegebenenfalls Wärme beaufschlagt. Durch die Einbettung des elektronischen Bauteils 3 in die ausgehärtete Füllmasse 4 ist das Bauteil vor zu hohen Belastungen geschützt. Jedoch darf die Temperatur eine das elektronische Bauteil 3 schädigende Temperatur nicht übersteigen. Das Laminieren kann unter Verwendung eines Klebstoffs oder ohne Klebstoff erfolgen.

Falls es sich bei dem elektronischen Bauteil 3 um ein Display handelt, weist diejenige der Deckfolien 8, 9, durch welche hindurch das Display betrachtet werden soll, zumindest in diesem Bereich eine Transparenz für sichtbares Licht auf, beispielsweise in Form eines Fensters. Es kann aber beispielsweise auch eine vollständig transparente Deckfolie verwendet werden. Die Deckfolien können darüber hinaus in nicht als transparent vorgesehenen Bereichen Aufdrucke aufweisen, welche ein Design darstellen oder Informationen wiedergeben. Falls das elektronische Bauteil beispielsweise ein Chip mit einer Antenne zur kontaktlosen Kommunikation mit einem entsprechenden Lesegerät ist, ist keine zusätzliche Kontaktierung durch die Deckfolien hindurch notwendig. Selbstverständlich können auf jeder Seite des Inlays 1 auch mehrere Deckfolien aus dem gleichen Material oder unterschiedlichen Materialien oder mehrlagige Folien vorgesehen sein. Der Weiterverarbeitung des Inlays zu einem fertigen Datenträger sind kaum Grenzen gesetzt.

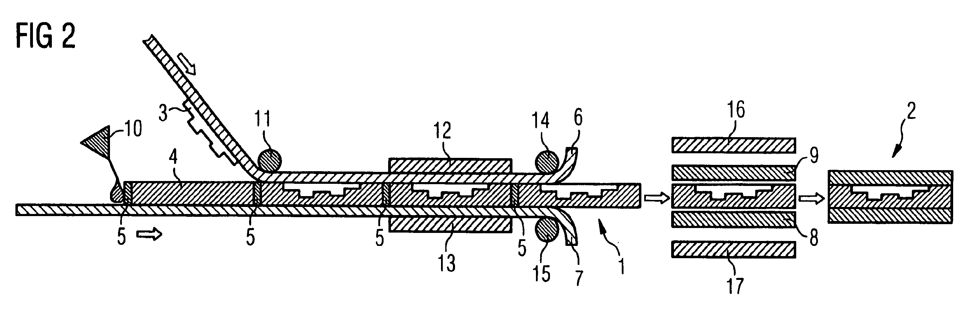

In Figur 2 ist ein alternatives Ausführungsbeispiel des Verfahrens dargestellt. Dieses gleicht im Wesentlichen dem in Figur 1 dargestellten Ausführungsbeispiel. Jedoch befinden sich der Formrahmen 5 und die elektronischen Bauteile 3 nicht auf derselben Trägerfolie. In diesem Ausführungsbeispiel werden zwar die elektronischen Bauteile 3, beispielsweise die Displays, auf der ersten Trägerfolie 6, die hier von oben zugeführt wird, wie beschrieben positioniert. Der Formrahmen 5 wird jedoch auf die zweite Trägerfolie 7 aufgesetzt, die hier horizontal geführt wird. Die Aussparungen des Formrahmens, in welchen sich zu diesem Zeitpunkt noch nicht die elektronischen Bauteile 3 befinden, werden mit dem Füllmaterial 4 gefüllt. Vorzugsweise werden die Aussparungen nicht vollständig gefüllt, damit die elektronischen Bauteile 3 problemlos aufgenommen werden können.

Erst beim Zusammenführen der Trägerfolien 6, 7 werden nun die elektronischen Bauteile 3 in die Aussparungen des Gitters 5 mit dem noch nicht ausgehärteten Füllmaterial 4 gedrückt. Dies erfolgt ebenfalls unter Verwendung einer Anpressrolle 11, wobei eventuell überquellendes Füllmaterial 4 aus den Aussparungen des Formrahmens 5 entfernt und die Trägerfolien 6, 7 gegen den Formrahmen 5 gedrückt werden. Die folgenden Schritte, d.h. das Aushärten des Füllmaterials 4, das Entfernen der Trägerfolien 6, 7, das Heraustrennen der Inlays 1 aus dem Formrahmen 5 und schließlich das Laminieren der Chipkarte 2 gleichen denen des in Figur 1 dargestellten Ausführungsbeispiels.

## Patentansprüche

1. Verfahren zur Herstellung von Inlays (1) für kartenförmige Datenträger (2), insbesondere Chipkarten, Kreditkarten, Identifikationsdokumente oder dergleichen, mit zumindest einem elektronischen Bauteil (3), umfassend die Schritte:
a) Positionieren von elektronischen Bauteilen (3) auf einer ersten Trägerfolie (6),
b) vor oder nach Schritt a), Aufsetzen eines Formrahmens (5) auf die erste Trägerfolie (6) oder auf eine zweite Trägerfolie (7), welcher eine oder mehrere Aussparungen aufweist, in welchen jeweils mindestens eines der elektronischen Bauteile (3) aufgenommen wird, wobei der Formrahmen (5) eine Höhe von mindestens der Höhe der elektronischen Bauteile (3) aufweist,
c) Füllen der Aussparungen des Formrahmens (5) mit Füllmaterial (4),
d) Zusammenführen der ersten (6) und zweiten (7) Trägerfolie, so dass sie von dem Formrahmen (5) auf Abstand gehalten werden,
e) Aushärten des Füllmaterials (4),
f) Entfernen der ersten (6) und der zweiten (7) Trägerfolie und
g) Heraustrennen eines oder mehrerer Inlays (1) aus der bzw. den Aussparungen des Formrahmens (5),
**dadurch gekennzeichnet, dass** die Schritte a) bis g) unter Wiederverwendung des Formrahmens (5) wiederholt werden und
dass die erste (6) und die zweite (7) Trägerfolie Umlaufbänder sind und das Verfahren als Endlosverfahren durchgeführt wird.

2. Verfahren nach Anspruch 1, **dadurch gekennzeichnet, dass** der Formrahmen (5) ein umlaufendes Gitterband ist.

3. Verfahren nach einem der Ansprüche 1 bis 2, **dadurch gekennzeichnet, dass** zum Aushärten des Füllmaterials (4) (Schritt e) ultraviolettes Licht durch mindestens einer der ersten (6) und zweiten (7) Trägerfolie hindurch auf das Füllmaterial (4) gestrahlt wird.

4. Verfahren nach Anspruch 3, **dadurch gekennzeichnet, dass** beim Schritt a) die elektronischen Bauteile (3) mittels eines Klebstoffs auf der ersten Trägerfolie (6) fixiert werden, welcher so gewählt ist, dass er unter Einwirkung des ultravioletten Lichts (Schritt e) erweicht.

5. Verfahren nach einem der Ansprüche 1 bis 3, **dadurch gekennzeichnet, dass** beim Schritt a) zum Fixieren der elektronischen Bauteile (3) auf der ersten Trägerfolie (6) das gleiche Material wie das Füllmaterial (4) verwendet wird.

6. Verfahren nach einem der Ansprüche 1 bis 5 **dadurch gekennzeichnet, dass** das Zusammenführen der ersten (6) und zweiten (7) Trägerfolie (Schritt d) unter Verwendung einer Anpressrolle (11) erfolgt, so dass überschüssiges Füllmaterial (4) aus den Aussparungen des Formrahmens (5) heraus gedrängt wird.

7. Verfahren nach einem der Ansprüche 1 bis 6, **dadurch gekennzeichnet, dass** zumindest die an dem Füllmaterial (4) angrenzenden Oberflächen der ersten (6) und zweiten (7) Trägerfolie im Wesentlichen aus PET bestehen.

8. Verfahren nach einem der Ansprüche 1 bis 7, **dadurch gekennzeichnet, dass** als Breiten- und Längenabmessungen der Aussparungen des Formrahmens (5) Normabmessungen gewählt werden, insbesondere des Formats ID-1 gemäß ISO 7810.

9. Verfahren zur Herstellung kartenförmiger Datenträger (2), insbesondere Chipkarten, Kreditkarten, Identifikationsdokumente oder dergleichen, mit zumindest einem elektronischen Bauteil (3), **dadurch gekennzeichnet, dass** ein Inlay (1) nach einem Verfahren der Ansprüche 1 bis 8 hergestellt und anschließend zwischen Deckfolien (8,9) laminiert wird.

## Claims

1. A method for producing inlays (1) for card-shaped data carriers (2), in particular chip cards, credit cards, identification documents or the like, with at least one electronic component (3), comprising the following steps of:
a) positioning electronic components (3) on a first carrier foil (6),
b) before or after step a), placing a mold frame (5) on the first carrier foil (6) or on a second carrier foil (7) having one or several gaps in each of which at least one of the electronic components (3) is accommodated, wherein the mold frame (5) has a height of at least the height of the electronic components (3),
c) filling the gaps of the mold frame (5) with filling material (4),
d) joining the first (6) and the second (7) carrier foil, so that they are spaced apart by the mold frame (5),
e) curing the filling material (4),
f) removing the first (6) and the second (7) carrier foil and
g) detaching one or several inlay(s) (1) from the gap or gaps of the mold frame (5),
**characterized in that** the steps a) to g) are repeated, reusing the mold frame (5), and that the first (6) and the second (7) carrier foil are circulating bands and the method is carried out as a continuous process.

2. The method according to claim 1, **characterized in that** the mold frame (5) is a circulating grid belt.

3. The method according to any of the claims 1 to 2, **characterized in that** for curing the filling material (4) (step e) ultraviolet light is radiated onto the filling material (4) through at least one of the first (6) and the second (7) carrier foils.

4. The method according to claim 3, **characterized in that** in step a) the electronic components (3) are fixed on the first carrier foil (6) by means of an adhesive, which is chosen such that it softens under the action of the ultraviolet light (step e).

5. The method according to any of the claims 1 to 3, **characterized in that** in step a) for fixing the electronic components (3) on the first carrier foil (6) the same material as the filling material (4) is used.

6. The method according to any of the claims 1 to 5, **characterized in that** the joining of the first (6) and the second (7) carrier foil (step d) takes place employing a pressure roller (11), so that excess filling material (4) is urged out of the gaps of the mold frame (5).

7. The method according to any of the claims 1 to 6, **characterized in that** at least the surfaces of the first (6) and the second (7) carrier foil adjacent to the filling material (4) consist substantially of PET.

8. The method according to any of the claims 1 to 7, **characterized in that** as width- and length dimensions of the gaps of the mold frame (5) standard dimensions are chosen, in particular of the format ID-1 according to ISO 7810.

9. A method for producing a card-shaped data carrier (2), in particular chip cards, credit cards, identification documents or the like, with at least one electronic component (3), **characterized in that** an inlay (1) is produced according to a method of the claims 1 to 8 and is subsequently laminated between cover foils (8, 9).

## Revendications

1. Procédé de fabrication d'inlays (1) pour supports de données (2) en forme de carte, notamment cartes à puce, cartes de crédit, documents d'identification ou autres objets similaires, comportant au moins un composant électronique, (3) comprenant les étapes :
a) positionnement de composants électroniques (3) sur une première feuille-support (6)
b) avant ou après l'étape a), pose, sur la première feuille-support (6) ou sur une deuxième feuille-support (7), d'un châssis de moule (5) comportant un ou plusieurs évidements dans lesquels est respectivement recueilli au moins un des composants électroniques (3), le châssis de moule (5) présentant une hauteur d'au moins la hauteur des composants électroniques (3),
c) remplissage des évidements du châssis de moule (5) avec du matériau de remplissage (4),
d) jonction de la première (6) et de la deuxième (7) feuille-support, de telle manière qu'elles sont maintenues à distance par le châssis de moule (5),
e) durcissement du matériau de remplissage (4),
f) enlèvement de la première (6) et de la deuxième (7) feuille-support et
g) découpage d'un ou de plusieurs inlays (1) dans le ou les évidements du châssis de moule (5),
**caractérisé en ce que** les étapes de a) à g) sont réitérées en réutilisant le châssis de moule (5) et
**en ce que** la première (6) et de la deuxième (7) feuille-support sont des bandes circulantes et **en ce que** le procédé est exécuté sous forme de procédé sans fin.

2. Procédé selon la revendication 1, **caractérisé en ce que** le châssis de moule (5) est une bande-grille circulante.

3. Procédé selon une des revendications de 1 à 2, **caractérisé en ce que**, pour le durcissement du matériau de remplissage (4) (étape e), de la lumière ultra-violette est irradiée sur le matériau de remplissage (4) à travers au moins une de la première (6) et deuxième (7) feuille-support.

4. Procédé selon la revendication 3, **caractérisé en ce que**, lors de l'étape a), les composants électroniques (3) sont fixés sur la première (6) feuille-support au moyen d'une colle qui est sélectionnée de telle sorte qu'elle se ramollit sous l'effet de la lumière ultra-violette (étape e).

5. Procédé selon une des revendications de à 1 à 3, **caractérisé en ce que**, lors de l'étape a), pour la fixation des composants électroniques (3) sur la première feuille-support (6), le même matériau que le matériau de remplissage (4) est utilisé.

6. Procédé selon une des revendications de à 1 à 5, **caractérisé en ce que** la jonction de la première (6) et de la deuxième (7) feuille-support (étape d) a lieu en utilisant un rouleau de pressage (11), de telle manière que du matériau de remplissage (4) excédentaire est expulsé des évidements du châssis de moule (5).

7. Procédé selon une des revendications de à 1 à 6, **caractérisé en ce qu'**au moins les surfaces adjacentes au matériau de remplissage (4) de la première (6) et de la deuxième (7) feuille-support consistent essentiellement en du PET.

8. Procédé selon une des revendications de à 1 à 7, **caractérisé en ce que**, en tant que dimensions de largeur et de longueur des évidements du châssis de moule (5), des dimensions normées sont sélectionnées, notamment de format ID-1 conformément à ISO 7810.

9. Procédé de fabrication de supports de données (2) en forme de carte, notamment cartes à puce, cartes de crédit, documents d'identification ou autres objets similaires, comportant au moins un composant électronique (3), **caractérisé en ce qu'**un inlay (1) est fabriqué selon un procédé des revendications de à 1 à 8 puis laminé entre deux feuilles de recouvrement (8, 9).
